# EUROPÄISCHE PATENTANMELDUNG

(11) **EP 1 454 741 A2**
(43) Veröffentlichungstag der Anmeldung: **08.09.2004**
(21) Anmeldenummer: 04004635.1
(22) Anmeldetag: 01.03.2004
(51) Int. Cl.: B32B 27/20, B32B 27/36

(54) **Kunststoff-Folie für Möbel oder Möbelteile**

(30) Priorität: 07.03.2003 DE 10309917
(71) Anmelder: Klöckner Pentaplast B.V., 6002 SM Weert (NL)
(72) Erfinder: Bremmers, Jack, 5932 GJ Tegelen (NL); Nouwen, Gerard, 3950 Bocholt (BE); Bakkes, Pim, 6021 LT Budel (NL)
(74) Vertreter: Zounek, Nikolai, Dipl.-Ing.

(57) **Zusammenfassung**

Eine Kunststoff-Folie für Möbel oder Möbelteile besteht aus zumindest einer koextrudierten dreilagigen Folie, deren Kernfolie (5) mittels eines Farbmasterbatches gleichmäßig eingefärbt ist. Die Kernfolie weist glatte Oberflächen auf, ebenso die auflaminierten Deckfolien (9,9). Die Folien bestehen aus amorphem Polyethylenterephthalat.

## Beschreibung

Die Erfindung betrifft eine Kunststoff-Folie für Möbel oder Möbelteile, mit einem drei- bis sechslagigen Folienaufbau, der eine eingefärbte Folie bzw. eingefärbte Schicht mit umfasst. Insbesondere besteht der Folienaufbau aus zwei Folien, von denen jede jeweils drei Lagen oder Schichten enthält. Bei dem Aufbau handelt es sich um amorphe, koextrudierte und/oder laminierte Folien, wobei der Rohstoff einzelner Folienschichten teilkristallin ist.

Für die Herstellung von Möbelteilen werden überwiegend PVC-Folien eingesetzt, deren besondere Eigenschaften ausgenutzt werden wie z. B. die gute Thermoformbarkeit über einen breiten Temperaturbereich, hohe Eindruckfestigkeit und sehr gute Kratzfestigkeit und dergleichen.

Aus Umweltschutzgründen sind Möbel oder Möbelteile, Türen, Verkleidungen im Innenbereich von Häusern aus PVC-Materialien nicht mehr erwünscht. Insofern werden mehr und mehr Polyolefin-haltige Folien für Möbel oder Möbelteile eingesetzt.

Aus der EP-A 0 213 441 ist eine derartige Polyolefin-Folie oder Polyolefin-Folienbahn für Möbel bekannt, die ein Gemisch oder eine Legierung eines Propylenhomo- oder -copolymerisates und Teilen Niederdruckpolyethylen, Polyvinylalkohol, Ethylen-Vinylalkohol-Copolymerisat, Ethylen-Acrylsäure-Copolymerisat, Acrylsäureester-Acrylsäureether-Polymerisat und/oder Polycaprolacton oder Mischungen bzw. Legierungen von Niederdruckpolyethylen mit einem oder mehreren der vorgenannten Polymerisate enthält. Des Weiteren enthält die Folie einen feinteiligen mineralischen Füllstoff oder ein mineralisches Füllstoffgemisch, von dem mehr als die Hälfte mindestens eine reaktive Substanz besitzt, wobei als reaktive Substanz eine polare und unpolare Gruppen aufweisende Substanz verwendet wird, die auf der Oberfläche oder auf einem Teil der Oberfläche des Füllstoffes oder des Füllstoffgemisches angeordnet ist. Diese bekannte Kunststoff-Folie weist eine gute Oberflächenbeschaffenheit auf und ist sehr gut haftend und bedruckbar. Die Folie ist jedoch schlecht tiefziehfähig und daher im Thermoformverfahren bei Möbelteilen mit Oberflächendekoration schwierig zu verarbeiten.

In der EP-B 0 704 482 ist eine Kunststoff-Folie für Möbel oder Möbelteile beschrieben, die ein Polyolefin sowie mindestens zwei andere Kunststoffe enthält, die sich chemisch und/oder physikalisch von dem Polyolefin unterscheiden. Gegebenenfalls sind Pigmente und/oder Farbstoffe, Verarbeitungshilfsmittel, Füllstoffe und/oder andere Zusatzstoffe vorhanden. Die Kunststoff-Folie enthält Propylenhomo- und/oder -copolymerisat oder Mischungen oder Legierungen von Propylenhomo- und/oder copolymerisat mit einem Polyethylen hoher Dichte (HDPE) oder mit einem Polyethylen sehr niedriger Dichte (LLDPE), gekraftetes oder gepfropftes Polypropylen oder Propylencopolymerisat, ein Polymerisat oder Polymerisatgemisch ausgewählt aus der Gruppe Polystyrol, Polymethylmethacrylat, Styrol-Acrylnitril-Co- oder -Pfropfpolymerisat, Acrylnitril-Butadien-Co- oder -Pfropfpolymerisat und/oder ASA, des Weiteren einen thermoplastischen Elastomeren oder ein Elastomergemisch und mindestens eine Verbindung, die Maleinsäure oder Maleinsäureanhydrid enthält, ein Homo- oder Mischpolymerisat und/oder Pfropfpolymerisat und/oder mindestens eine Azidosulfonbenzoesäure enthaltende Verbindung, ein Homo- oder Mischpolymerisat und/oder Pfropfpolymerisat.

Diese bekannten Kunststoffe für Möbelfolien sind auf Grund der vielen Bestandteile aufwändig herzustellen.

Bei der Herstellung von gefärbten Kunststoff-Folien für die Möbelindustrie stellt sich vor allem das Problem eine hohe Farbkonstanz der eingefärbten Folie zu erreichen, was eine Folie bedingt, die weitgehend homogen aufgebaut ist, d. h. möglichst wenig unterschiedliche Kunststoffanteile enthält. Darüber hinaus müssen die übrigen Anforderungen an solche Kunststoff-Folien wie hohe Kratzfestigkeit, guter Glanz, gute Planlage, hohe Eindruckfestigkeit und gute Bedruckbarkeit vorliegen.

Aufgabe der Erfindung ist es eine Kunststoff-Folie für Möbel oder Möbelteile bereit zu stellen, die eine hohe Farbkonstanz, eine vorgegebene Struktur sowie eine höhere Wärmestandfestigkeit als geprägte PVC-Folien hat.

Diese Aufgabe wird erfindungsgemäß in der Weise gelöst, dass die eingefärbte Folie auf einer Oberfläche eine Prägung aufweist, während die gegenüber liegende Oberfläche glatt ist oder beide Oberflächen glatt oder geprägt sind und dass die Einfärbung mittels eines nachkristallisierten Farbmasterbatches erfolgt.

Die Wärmestandfestigkeit soll bis zu einer Temperatur von etwa 150 bis 180 °C über eine Zeitspanne von 5 Minuten gegeben sein, d. h. innerhalb dieses Temperaturbereichs soll die Prägung stabil sein. Die erwünschte Wärmestandfestigkeit gleich/größer 120 °C/5 Minuten wird durch Heißprägen im in-line-Betrieb erreicht für unifarbige Folien.

In Ausgestaltung der Erfindung ist die Prägung von unterschiedlicher Struktur wie grobmatt, feinmatt und/oder entspricht sie einer in der Möbelindustrie gängigen Holzfaserstruktur. Die Struktur wird in dem angegebenen Temperaturbereich von 150 bis 180 °C im off-line-Betrieb bei der Herstellung der Folie heiß geprägt.

Gemäß einer bevorzugten Ausführungsform ist die Farbkonstanz des Farbmasterbatches gemäß der Farbmessung nach der CIELAB-Messmethode im Vergleich mit einer Standardfarbe einstellbar. Dabei ist erfindungsgemäß der Metamerie-Index der eingefärbten Folien gegenüber der Standardfarbe kleiner 0,3. Zwei Proben, nämlich die Messprobe und die Standardprobe, die unter der Beleuchtung mit Licht der gleichen Wellenlänge die gleiche Farbe, aber unterschiedliche Spektralremissions- oder Transmissionskurven haben, sehen im allgemeinen unter Licht einer anderen Wellenlänge farblich unterschiedlich aus. Der Metamerie-Index gemäß der Norm DIN 6172, März 1993, beschreibt diesen durch den Wechsel der Lichtwellenlänge verursachten Farbabstand quantitativ mit Hilfe eines Farbabstandsmaßes ÄE. Somit ist der Metamerie-Index ein Maß für die Änderung des Farbabstandes zwischen zwei Proben, nicht jedoch für die Farbkonstanz einer einzelnen Probe bei Änderung der Wellenlänge des Beleuchtungslichtes. Je kleiner der Metamerie-Index ist, desto geringer ist der Farbabstand zwischen den zwei Proben. Das Referenzlicht ist Licht mit einer Wellenlänge, bei der der Farbabstand zwischen den beiden zu prüfenden Proben null sein soll. Als Referenzlicht werden bestimmte Lichtarten vorgegebener Wellenlängen verwendet.

In weiterer Ausgestaltung der Erfindung enthält das Farbmasterbatch bis zu 65 Gew.-% Titandioxid, Chrom-, Eisenoxid, Siliziumoxid, Silikate, Chromate oder sonstige metallische Oxide.

In einer bevorzugten Ausführungsform ist die eingefärbte Folie eine Polyethylenterephthalat-Folie mit einer Nominaldicke von 250 bis 600 µm, gegebenenfalls unter Einschluss der Prägung.

In weiterer Ausgestaltung der Erfindung ist auf die eingefärbte Folie eine glasklare Folie mit glatter Oberfläche auflaminiert. Dabei hat die glasklare Folie eine Dicke von 60 bis 150 µm.

In einer anderen Ausführungsform ist auf die glatte eingefärbte Folie eine glasklare Folie mit eingeprägter Flächenstruktur als Deckschicht auflaminiert. Ebenso kann die Folie in Sandwich-Bauweise beidseitig mit je einer glasklaren Folie mit glatter Oberfläche als Deckschicht laminiert sein. Dabei hat jede der glasklaren Folien eine Dicke von 60 bis 150 µm und beträgt die Nominaldicke der eingefärbten Folie 250 bis 600 µm.

In Weiterbildung der Erfindung haben die beiden glasklaren Folien gleiche Dicke und gleiche Beschaffenheit und bestehen aus dem gleichen Kunststoff. Bevorzugt sind die beiden glasklaren Folien Polyethylenterephthalat-Folien. Der Rohstoff der Polyethylenterephthalat-Folien kann teilkristallin sein.

Für den Fall, dass die Transparenz der Deckschichten bzw. Deckfolien nach dem Verpressen mit der eingefärbten Folie weitgehend erhalten bleiben soll, ist es erforderlich, dass die glasklaren Folien aus amorphem Polyethylenterephthalat bestehen, da ansonsten jede Kristallinität der Folien die Einfärbung ungleichmäßig aussehen ließe.

Ebenso ist es gemäß der Erfindung möglich, falls die Kratzfestigkeit und die Druckfestigkeit zusätzlich erhöht sein sollen, dass die Polyethylenterephthalat-Folien Zusätze von Glasfasern enthalten. Gegebenenfalls können noch weitere Zusätze wie Verarbeitungshilfsmittel, Füllstoffe, Gleitmittel, Wärmestabilisatoren, UV-Stabilisatoren, Antioxidantien und/oder Flammschutzmittel vorhanden sein.

Bei erhöhtem Bedarf an Kratzfestigkeit und einem bestimmten Glanzgrad wird die Oberfläche der Kunststoff-Folie noch zusätzlich lackiert. Auf die Rückseite der Kunststoff-Folie wird ein üblicher Kleber, beispielsweise eine Polyurethan-Dispersion, aufgebracht, die unter Zusatz von Vernetzungsmitteln eingestellt wird. Unter Druck und Temperatur wird dann eine derartige Kunststoff-Folie mit dem Holzfrontteil eines Möbels oder einem sonstigen Holzteil, aus dem ein Möbelteil gefertigt wird, verbunden.

Das Farbmasterbatch wird zusammen mit dem PET-Granulat in den Extruder eingebracht. Falls die Farbmessung des Farbmasterbatches im Vergleich mit der Standardfarbe, wobei die Messung vor dem Einbringen des Masterbatches in den Extruder vorgenommen wird, Farbabweichungen ergeben hat, kann eine Korrektur durch das Eindosieren von Einzelfarbpigment-Konzentrat über eine Dosierschnecke in die Einzugszone des Extruders vorgenommen werden. Der Glanzgrad wird durch Einstellung unterschiedlicher Geschwindigkeiten zwischen einer Glättwalze und einer Gießwalze, über welche die eingefärbte Folie zusammen mit ihren Deckschichten läuft, bestimmt.

Je niedriger die Umlaufgeschwindigkeite der Glättwalze gegenüber der Umlaufgeschwindigkeit der Gießwalze ist, desto niedriger ist der Glanzgrad. Die Rauigkeit Rz der Folie wird durch die Schließkraft der Glättwalzen bestimmt.

Die Erfindung wird im folgenden an Hand von zeichnerisch schematisch dargestellten Ausführungsformen näher erläutert. Es zeigen:
- Fig. 1a: im Schnitt eine eingefärbte Folie mit einer Prägung,
- Fig. 1b: im Schnitt eine eingefärbte Folie mit zwei glatten Oberflächen ohne Prägung,
- Fig. 1c: im Schnitt eine eingefärbte Folie mit zwei geprägten Oberflächen,
- Fig. 2: die Folie nach Figur 1a, mit einer auflaminierten glasklaren Deckfolie,
- Fig. 3: im Schnitt eine glatte eingefärbte Folie nach Fig. 1b ohne Prägung, die mit einer geprägten glasklaren Deckfolie laminiert ist,
- Fig. 4: eine eingefärbte Folie mit Prägung, die beidseitig mit glatten Deckfolien laminiert ist,
- Fig. 5: eine eingefärbte glatte Folie, die beidseitig mit glatten Deckfolien laminiert ist, und
- Fig. 6: einen mehrlagigen Folienaufbau aus einem dreilagigen Boden und einem dreilagigen Dekoraufbau.

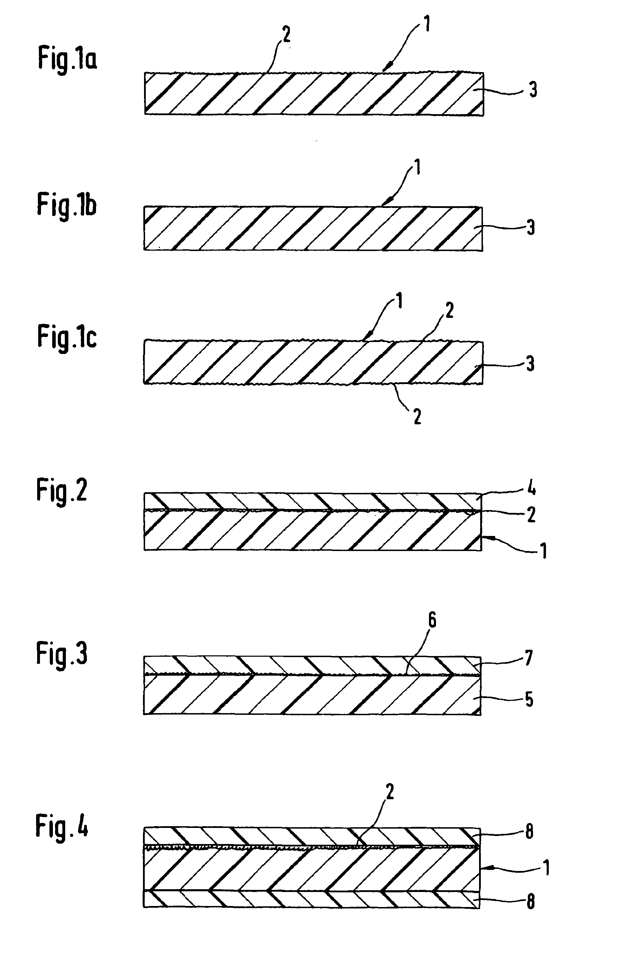

Die in Fig. 1a dargestellte Folie 1 weist auf einer Seite eine Prägung 2 auf und ist mittels eines Farbmasterbatches 3 gleichmäßig eingefärbt. Das Farbmasterbatch enthält bis zu 65 Gew.-% TiO₂, Chrom-, Eisenoxid, Siliciumoxid, Silikate, Chromate oder sonstige metallische Oxide. Die Farbkonstanz der eingefärbten Folie, als auch die Farbkonstanz des Farbmasterbatches werden im Vergleich mit einer Standardfarbe eingestellt, wobei die Farbmessung nach der CIELAB-Methode erfolgt, und diese Farbmessung durch die Normen DIN 33866-1 bis 5, 1998 und ISO/IEC 15775, 1999 festgelegt ist. Das Farbmasterbatch enthält des weiteren Kunststoffmaterial, das nachkristallisiert ist. Dies bedeutet, dass das Farbmasterbatch bei Temperaturen, bei denen üblicherweise eine Nachkristallisation des Kunststoffes eintritt, absolut stabil bleibt und sich hinsichtlich seiner Färbung nicht verändert.

Die Prägung 2 kann von Folie zu Folie von unterschiedlicher Struktur sein. Diese Struktur ist beispielsweise grobmatt, feinmatt oder entspricht einer in der Möbelindustrie gängigen Holzfaserstruktur. Bei der Folie 1 handelt es sich um eine Polyethylenterephthalat-Folie, die unter Einschluss der Prägung 2 eine nominale Dicke von 250 bis 600 µm hat. Das Rohmaterial Polyethylenterephthalat dieser Folie ist teilkristallin, die Folie selbst ist amorph und kann während der Heißprägung, die im allgemeinen bei Temperaturen zwischen 240 bis 280 °C vorgenommen wird, nachkristallisieren. Das Farbmasterbatch, das in der Folie feinverteilt ist und diese einfärbt, trocknet bei den Temperaturen, bei denen die Folie 1 nachkristallisiert.

Die Folie 1 kann auch ohne Prägung hergestellt sein, wie dies in Fig. 1b dargestellt ist oder auf beiden, sich gegenüberliegenden Oberflächen mit je einer Prägung 2 ausgestaltet sein, wie in Fig. 1c gezeigt.

Bei der Ausführungsform nach Fig. 2 ist auf die Folie 1, wie sie in Fig. 1a gezeigt ist, eine glasklare Folie 4, die eine glatte Oberfläche aufweist, auflaminiert. Die Dicke der glasklaren Folie 4 liegt im Bereich von 60 bis 150 µm. Das Rohmaterial Polyethylenerephthalat der glasklaren amorphen Folie 4 ist gleichfalls amorph.

Fig. 3 zeigt eine Ausführungsform der Folie, bei der eine Folie 5, die keine Prägung aufweist, die Kernfolie eines Folienverbundes bildet. Auf diese Folie 5 ist eine glasklare Folie 7 mit eingeprägter Flächenstruktur 6 als Deckschicht auflaminiert. Die Folie 5 ist wiederum mittels eines Farbmasterbatches eingefärbt. Die Folie 7 kann auch eine beidseitig geprägte Folie sein, die im Einzelnen nicht dargestellt ist.

Die Farbkonstanz bzw. der Farbabstand der eingefärbten Folien 1 bzw. 5 gegenüber einer Standardfarbe wird durch den sogenannten Metamerie-Index festgelegt. Der Metamerie-Index, wie er in der DIN-Norm 6172, März 1993 beschrieben ist, wird quantitativ mit Hilfe eines Farbabstandsmaßes ÄE definiert, das den durch einen Wechsel der Wellenlänge des Lichtes, mit dem die jeweilige Probe beleuchtet wird, verursachten Farbabstand angibt. Es gilt nämlich, dass zwei Proben, die unter der Beleuchtung mit Licht der gleichen Wellenlänge gleiche Farbe, aber unterschiedliche spektrale Remissions- oder Transmissionskurven haben, bei Beleuchtung mit Licht einer anderen Wellenlänge farblich unterschiedlich aussehen. Der Metamerie-Index ist ein Maß für die Änderung dieses Farbabstandes zwischen solchen zwei Proben. Das Referenzlicht ist Licht mit einer Wellenlänge, bei der der Farbabstand zwischen den beiden zu prüfenden Proben null sein soll. Als Referenzlicht wird Licht von definierter Wellenlänge verwendet. Das Prüflicht ist Licht einer Wellenlänge, bei welcher der Farbabstand zwischen den zwei Proben bewertet werden soll. Als Prüflicht wird bevorzugt Normlicht A und/oder das Licht von Leuchtstofflampen gemäß dem Standard Cool White mit den Bezeichnungen F2 und F11 verwendet (DIN-Norm 6174).

Bei den Ausführungsformen gemäß der vorliegenden Erfindung ist der Metamerie-Index der eingefärbten Folien 1 bzw. 5 gegenüber der Standardfarbe kleiner 0,3.

Sowie für die eingefärbten Folien die Einfärbung festliegt, wird die Einfärbung der nachfolgenden Folienprodukte jeweils nach der CIELAB-Methode für die Werte L*, a*, b* bestimmt.

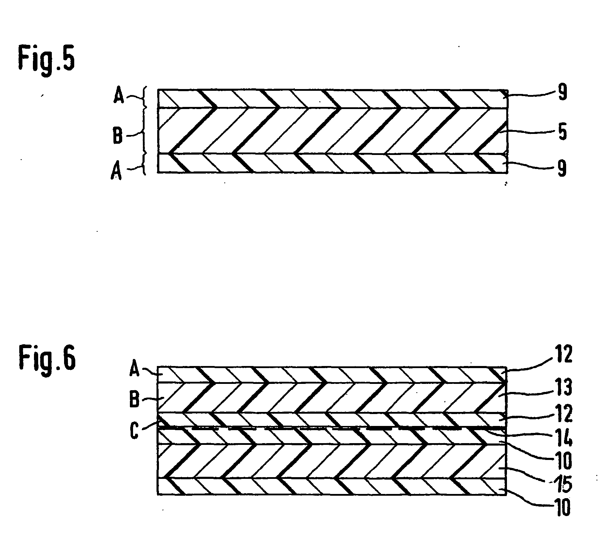

Bei der in Fig. 4 gezeigten Ausführungsform der Erfindung ist die Folie 1 beidseitig mit je einer glasklaren Folie 8, 8 als Deckschicht laminiert. Die glasklaren Folien 8, 8 haben eine glatte Oberfläche, während die Folie 1, ebenso wie bei der Ausführungsform nach Fig. 1, eine Prägung 2 aufweisen kann oder aber ohne Prägung sein kann, wie in Fig. 5 dargestellt. Die Dicke der glasklaren Folien 8, 8 beträgt 60 bis 150 µm. Die beiden glasklaren Folien 8, 8 haben bevorzugt gleiche Dicke und gleiche Beschaffenheit und bestehen aus dem gleichen Kunststoff. Bevorzugt handelt es sich bei den beiden glasklaren Folien 8, 8 um Polyethylenterephthalat-Folien, die teilkristallin sind. Ebenso ist es möglich, dass eine oder beide glasklaren Folien 8, 8 aus amorphem Polyethylenterephthalat bestehen.

Die Folie nach Fig. 5 hat einen A-B-A Aufbau, bei dem beispielsweise die Kernfolie 5 ebenso wie die beiden Deckfolien 9, 9 jeweils aus amorphem Polyethylenterephthalat bestehen. Die Kernfolie 5 ist mit dem zuvor beschriebenen Farbmasterbatch eingefärbt, das nachkristallisiertes Kunststoffmaterial enthält und sich bei Temperaturen, bei denen üblicherweise Nachkristallisation eintritt, nicht verändert und daher weitgehend farbkonstant ist.

Die Deckfolien 9,9 sind glasklar und bestehen aus dem gleichen amorphen Polyethylenterephthalat wie die Kernfolie 5, insofern wird dieser Folienaufbau als Unifolie bezeichnet, da alle drei Folienlagen aus dem gleichen Material bestehen.

Amorphe Polyester werden z. B. durch Umsetzung von aliphatischen Glykolen, alizyklischen Glykolen und Gemischen hiervon mit aromatischen Dicarbonsäuren, aliphatischen Dicarbonsäuren, alizyklischen Dicarbonsäure und Gemischen davon, gewonnen. Beispiele für derartige amorphe Polyester sind Isophthalatpolymere, gewonnen. Beispiele für derartige amorphe Polyester sind Isophthalatpolymere, gewonnen durch Umsetzung von Isophthalsäure und Terephthalsäure mit Ethylenglykol und amorphe Terephthalat-Copolymere, gebildet durch Umsetzung von Terephthalsäure mit Ethlyenglykol und Cyclohexandimethanol. Derartige amorphe Polyester sind im Handel erhältlich.

Das Molekulargewicht dieser amorphen Polyester unterliegt keinen speziellen Beschränkungen. Die Glasübergangstemperatur Tg beträgt etwa 45 bis 100 °C, insbesondere 50 bis 65 °C. Die Temperatur Tg wird bei einer Temperaturerhöhung von 10 °C/min beim Bestimmen des Übergangspunktes der latenten Wärme mittels DSC gemessen. Die Grenzviskosität IV ist zumindest 0,6 dl/g, bevorzugt 0,8 bis 0,9 dl/g, bei 25 °C gemessen in o-Chlorphenol.

Als amorpher Polyester wird ein Polymer bezeichnet, bei dem keine Kristallisation oder Kristallschmelzspitzen, gemessen durch DSC, erkennbar sind und bei dem nach einer vorgegebenen Standzeit unter einer Atmosphäre bei 190 °C keine Entglasung aufgrund einer Kristallisation auftritt. In dem Fall, dass ein amorpher Polyester teilkristalline Strukturen, eingefroren in der amorphen Phase, enthält, sind in der DSC-Analyse Kristallschmelzspitzen erkennbar.

Fig. 6 zeigt einen Folienaufbau einer Möbelfolie bestehend aus sechs Lagen, von denen drei Lagen den Boden und drei Lagen das Dekor bilden. Die drei unteren Lagen bilden eine PET-Folie, bestehend aus einer glatten, glasklaren amorphen Polyesterschicht10, einer glatten eingefärbten Kernschicht 15 aus amorphem Polyester und einer weiteren glatten, glasklaren, amorphen Polyesterschicht 10. Das Dekor besteht aus einem dreilagigen Aufbau aus glasklaren, nicht eingefärbten, glatten Polyesterschichten12, 13, 12, von denen jede amorph ist. Ein Druckbild 14 ist auf die innenliegende Schicht 12 aufgebracht, die über einen Laminiervorgang mit der Schicht 10 zusammengebracht wird. Das Druckbild 14 ist innenliegend aufgebracht und daher ausreichend gegen Beschädigungen geschützt.

Der Folienaufbau nach Fig. 6 wird in der Weise hergestellt, dass beispielsweise der Boden durch Koextrusion der Schichten 10, 15 produziert wird und die Schichten 12, 13 gleichfalls durch Koextrusion zusammengefügt werden. Wie zuvor erwähnt, wird die innenliegende weitere Schicht 12 in einem eigenen Arbeitsgang mit dem Druckbild 14, das beispielsweise eine Holzstruktur oder -maserung wiedergibt. und mit der weiteren Schicht 10 durch Laminieren zusammengefügt. Danach werden die koextrudierten Schichten 10, 15 des Bodens, die miteinander laminierten Schichten 10, 12 und die koextrudierten Schichten 12, 13 des Dekors miteinander laminiert.

In Ausgestaltung der Erfindung können die Polyethylenterephthalat-Folien 1, 4, 5, 7, 8, 9 Zusätze von Glasfasern und gegebenenfalls von Verarbeitungshilfsmitteln, Füllstoffen, Gleitmitteln, Wärmestabilisatoren, UV-Stabilisatoren, Antioxidantien und/oder Flammschutzmitteln enthalten. Durch den Zusatz von Glasfasern wird im allgemeinen die Kratzfestigkeit und die Eindruckfestigkeit der Folien erhöht. Die Gleitmittel erhöhen die Verarbeitbarkeit der Folien.

## Patentansprüche

1. Kunststoff-Folie für Möbel oder Möbelteile, mit einem drei- bis sechslagigen Folienaufbau, der eine eingefärbte Folie bzw. eine eingefärbte Schicht mit umfasst, **dadurch gekennzeichnet, dass** die eingefärbte Folie (1; 5) auf einer Oberfläche eine Prägung (2) aufweist, während die gegenüber liegende Oberfläche glatt ist oder beide Oberflächen glatt oder geprägt sind, dass die eingefärbte Schicht (15) beidseitig glatt ist, und dass die Einfärbung der Folie (5) mit der Schicht (15) mittels eines nachkristallisierbaren Farbmasterbatches (3) erfolgt.

2. Kunststoff-Folie nach Anspruch 1, **dadurch gekennzeichnet, dass** die Prägung (2) von unterschiedlicher Struktur wie grobmatt, feinmatt ist und/oder einer in der Möbelindustrie gängigen Holzfaserstruktur entspricht.

3. Kunststoff-Folie nach Anspruch 1, **dadurch gekennzeichnet, dass** die Farbkonstanz des Farbmasterbatches (3) gemäß der Farbmessung nach der CIELAB-Methode im Vergleich mit einer Standardfarbe einstellbar ist.

4. Kunststoff-Folie nach Anspruch 1, **dadurch gekennzeichnet, dass** die Folie (1) eine Polyethylenterephthalat-Folie mit einer Nominaldicke von 250 bis 600 µm, gegebenenfalls unter Einschluss der Prägung (2), ist.

5. Kunststoff-Folie nach Anspruch 3, **dadurch gekennzeichnet, dass** auf die eingefärbte Folie (1) eine glasklare Folie (4) mit glatter Oberfläche auflaminiert ist.

6. Kunststoff-Folie nach Anspruch 5, **dadurch gekennzeichnet, dass** die glasklare Folie (4) eine Dicke von 60 bis 150 µm hat.

7. Kunststoff-Folie nach Anspruch 1, **dadurch gekennzeichnet, dass** auf die glatte eingefärbte Folie (5) eine glasklare Folie (7) mit eingeprägter Flächenstruktur (6) als Deckschicht auflaminiert ist, und dass die Nominaldicke der eingefärbten Folie (5) 250 bis 600 µm beträgt.

8. Kunststoff-Folie nach Anspruch 1 und 3, **dadurch gekennzeichnet, dass** der Metamerie-Index der eingefärbten Folie (1; 5) gegenüber der Standardfarbe kleiner 0,3 ist.

9. Kunststoff-Folie nach Anspruch 1, **dadurch gekennzeichnet, dass** auf die eingefärbte Folie (1,5) beidseitig je eine glasklare Folie (8, 8; 9,9) mit glatter Oberfläche als Deckschicht auflaminiert ist.

10. Kunststoff-Folie nach Anspruch 9, **dadurch gekennzeichnet, dass** jede der glasklaren Folien (8, 8; 9, 9) eine Dicke von 60 bis 150 µm hat.

11. Kunststoff-Folie nach Anspruch 9, **dadurch gekennzeichnet, dass** die beiden glasklaren Folien (8, 8; 9, 9) gleiche Dicke und gleiche Beschaffenheit haben und aus dem gleichen Kunststoff bestehen.

12. Kunststoff-Folie nach Anspruch 11, **dadurch gekennzeichnet, dass** die beiden glasklaren Folien (8, 8; 9, 9) und die eingefärbte Folie (1; 5) Polyethylenterephthalat-Folien sind.

13. Kunststoff-Folie nach einem der Ansprüche 1 bis 12, **dadurch gekennzeichnet, dass** der Rohstoff der Polyethylenterephthalat-Folien (1; 4; 5; 7; 8, 8; 9, 9) teilkristallin ist.

14. Kunststoff-Folie nach Anspruch 13, **dadurch gekennzeichnet, dass** die Polyethylenterephthalat-Folien (1; 4; 5; 7; 8; 8) Zusätze von Glasfasern und Verarbeitungshilfsmitteln, Füllstoffen, Gleitmitteln, Wärmestabilisatoren, UV-Stabilisatoren, Antioxidantien und/oder Flammschutzmitteln enthalten.

15. Kunststoff-Folie nach Anspruch 1 oder 3, **dadurch gekennzeichnet, dass** das Farbmasterbatch (3) bis zu 66 Gew.-% TiO₂, Chrom-, Eisenoxid, Siliziumoxid, Silikate, Chromate oder sonstige metallische Oxide enthält.

16. Kunststoff-Folie nach Anspruch 13, **dadurch gekennzeichnet, dass** die Polyethylenterephthalat-Folien aus amorphem Polyethylenterephthalat bestehen.

17. Kunststoff-Folie nach Anspruch 1, **dadurch gekennzeichnet, dass** sie aus einem dreilagigen Boden (10, 15, 10), umfassend die eingefärbte Schicht (5), die beidseitig mit je einer glasklaren Schicht (10, 10) laminiert ist und einem dreilagigen Aufbau aus einer nicht eingefärbten glasklaren Schicht (13), die an jeder Seite von einer glasklaren Schicht (12, 12) eingeschlossen ist, besteht.

18. Kunststoff-Folie nach Anspruch 17, **dadurch gekennzeichnet, dass** die Schichten (10, 15, 12, 13) aus amorphem Polyethylenterephthalat bestehen.

19. Kunststoff-Folie nach Anspruch 18, **dadurch gekennzeichnet, dass** zwei Schichten (10, 15) des dreilagigen Bodens und zwei Schichten (12, 13) des dreilagigen Aufbaues jeweils für sich koextrudiert sind, dass eine weitere Schicht (12) des Aufbaues mit einem innenliegenden Druckbild (14) bedruckt und mit einer weiteren Schicht (10) des Bodens laminiert ist und dass die koextrudierten Schichten (10, 15) des Bodens, die miteinander laminierten, das Druckbild (14) einschließenden Schichten (10, 12) und die koextrudierten Schichten (12, 13) des Aufbaues miteinander laminiert sind.
